Europäisches Patentamt

European Patent Office

Office européen des brevets

(19)

(11) EP 1 447 927 A1

(12) EUROPEAN PATENT APPLICATION

(43) Date of publication:
18.08.2004 Bulletin 2004/34

(51) Int Cl.$^7$: H04B 17/00

(21) Application number: 03290388.2

(22) Date of filing: 17.02.2003

(84) Designated Contracting States:
AT BE BG CH CY CZ DE DK EE ES FI FR GB GR
HU IE IT LI LU MC NL PT SE SI SK TR
Designated Extension States:
AL LT LV MK RO

(71) Applicant: FRANCE TELECOM SA
75015 Paris (FR)

(72) Inventors:
• Wendt, Stefan
75014 Paris (FR)
• Saadani, Ahmed
92240 Malakoff (FR)

• Gelpi, Pierre
78590 Noisy Le Roi (FR)
• Duponteil, Daniel
92170 Vanves (FR)

(74) Representative: DeVile, Jonathan Mark, Dr.
D. Young & Co
21 New Fetter Lane
London EC4A 1DA (GB)

Remarks:
Amended claims in accordance with Rule 86 (2)
EPC.

(54) Signal processing apparatus and method

(57) A method of representing the effects on a received signal of a radio communications channel having L paths with a reduced computational effort is achieved by transforming a representation of the channel into a simplified representation. Each path of the radio communications channel has an average attenuation and a pre-determined respective delay. The received signal includes a combination of correlated components determined from an effect of pulse shaping filters on the received signal, each component being correlated with respect to each of the other components represented by a plurality of correlation coefficients. The method comprises generating a plurality of complex zero mean gaussian random variables each having a pre-determined variance, and summing the variables, to form a representation of the signal received via the radio communications channel. The pre-determined variance of each variable is calculated from the eigen values of a matrix formed from the correlation coefficients and a channel correlation matrix which includes the average attenuation of each of the L paths. Accordingly a transformation of the L-path channel into a simplified representation is effected, without a requirement to represent the correlated components of the received signal. The correlated components may be, for example, the signal components produced by each of a plurality of correlators of a rake receiver.

Fig. 3

EP 1 447 927 A1

**Description**

**Field of the Invention**

The present invention relates to signal processing apparatus and methods for representing the effects of radio communications channels.

**Background of the Invention**

Data is communicated using radio signals by modulating a radio frequency signal with the data in some way. The radio frequency signal propagates from a transmitting antenna and is detected by a receiving antenna. An estimation of the communicated data is then recovered by de-modulating the received radio signal.

In order to develop techniques for communicating data using radio frequency signals, models which represent the effects on the data during communication from the transmitter to the receiver antenna have been developed. For example, for mobile radio telephone systems, propagation and channel modelling studies have been performed for radio frequency bands utilised by the Global System for Mobiles (GSM) and the Universal Mobile Telecommunications System (UMTS) for 3$^{rd}$ Generation mobile (3G). To develop such models channel sounding measurements were made and in combination with theoretical considerations, statistical channel models were developed.

Radio communications channels associated with mobile radio systems such as GSM and UMTS are characterised by including a number of multi-path rays with distinct propagation delays. Each path represents the propagation of a version of a radio signal from a transmitter to a receiver. It is known that the amplitude of each version of the radio signal received via each of the paths can be represented as zero mean complex gaussian random variable. At the receiver the multi-path versions combine to form a composite signal. If the difference between the respective delays for each path exceeds a symbol period of the communicated data, then inter-symbol interference occurs, which must be corrected in order for data to be communicated. Hence, receiver techniques are arranged to recover data in the presence of multi-path propagation. In order to simulate a multi-path radio communications channel, a complex gaussian random variable is generated for each path and for each sample of the simulated radio signal. Therefore, the simulation of such multi-path channels can represent a substantial computational task, requiring a relatively long time to generate simulation results representing the performance of a radio communications receiver. In particular, but not exclusively, a time taken to simulate spread spectrum communications can be prohibitively long. This is because a spread spectrum signal is formed by arranging for the data to be communicated to modulate a spreading code. The spreading code includes a much greater number of bits, referred to as chips, than the data being communicated. Thus for each chip a multi-path fading channel must be simulated, representing a greater computational task than that for simulating a base band data symbol, where no spreading is modelled. For this reason it is desirable to reduce the number of computations by simplifying the simulation of a radio communications channel.

Examples of communications techniques, which might be simulated, include channel coding techniques such as forward error correction encoding and decoding. In order to evaluate such techniques for a radio communications channel it is desirable to represent the time correlation effects of the radio communications channels. This is because radio communications channels are characterised by fading effects, where multiple rays of the radio signal combine destructively during some instances and constructively at other instants, which can have an effect of introducing bursts of errors of the communicated data. Therefore the performance of the radio channel is time correlated.

A technical article by Stefan A. Fechtel entitled "A Novel Approach to Modeling and Efficient Simulation of Frequency-Selective Fading Radio Channels," published in the IEEE Journal on Selected Areas in Communications, Vol. 11, No. 3, April 1993, discloses a two step channel orthogonalisation technique. The orthogonalisation technique only provides a facility for obtaining a bounded performance for channel coding techniques, whereas a more exact performance representing the time correlation effects of the radio channel is preferable.

**Summary of Invention**

According to the present invention there is provided a signal processing apparatus operable to represent the effects on a received signal of a radio communications channel having $L$ paths. Each path has an average attenuation and a pre-determined respective delay. The received signal includes a combination of correlated components determined from an effect of pulse shaping filters on the received signal, each correlated component having a correlation coefficient representing a correlation of the received signal component with respect to each of the other components. The signal processing apparatus comprises a plurality of signal simulators, each simulator generating a signal component value proportional to a complex zero mean gaussian random variable having a pre-determined variance. The signal processing apparatus includes a summer operable to sum the signal component values produced from each signal simulator, to form a representation of the signal received via the radio communications channel. The variance of each of the signal simulators is pre-determined by calculating the eigen values of a matrix formed from the correlation coefficients and from a channel correlation matrix which includes the average attenuation of each of the $L$ paths.

Embodiments of the present invention can provide simulators for radio communications channels, which can represent the radio communications channel with a substantially reduced complexity with respect to known simulators. The reduction in complexity is achieved by performing a transformation of a conventional representation of a radio communications channel having $L$ paths and $L$ correlation coefficients. As a result of the transformation the radio communications channel may not only be simulated with substantially reduced complexity but also removes a requirement for representing the correlation between correlated components from which the received signal is formed. Furthermore in some embodiments, the number of signal simulators may be less than the number of paths $L$ of the radio communications channel being simulated. This is because after the transformation has been performed, the effect of the signal simulators with longer delays is relatively small compared with signal simulators with shorter delays and so ignoring these terms can provide a good approximation to the simulated channel. Therefore in such embodiments, the number of signal simulators is determined from the number of eigen values above a pre-determined threshold, each eigen value above the threshold forming the pre-determined variance for a corresponding signal simulator.

In some embodiments, the correlation coefficients, representing a correlation between each correlated component with respect to each of the other components, may represent a correlation between the output of each correlator of a rake receiver. For Code Division Muliple Access (CDMA) communications a rake receiver is often used to recover data from a spread spectrum signal. Each correlator of the rake receiver correlates the received signal with respect to a spreading code at a pre-determined delay. The output of each rake correlator may be correlated with respect to the outputs of the other correlators, the correlation being represented by the correlation coefficients. However, embodiments of the present invention are not limited to simulating CDMA communications. In other embodiments the separate components of the communicated signal may be formed Multiple Inputs Multiple Outputs (MIMO) communications or Time Division Multiple Access (TDMA).

Various further aspects and features of the present invention are defined in the appended claims and include a method of representing the effects of a radio communications channel, a method of simulating a radio communications channel and a computer program.

### Brief Description of the Drawings

Embodiments of the present invention will now be described by way of example only with reference to the accompanying drawings, where like parts are provided with corresponding reference numerals, and in which:

Figure 1 is a schematic block diagram of a transmitter and receiver chain of parts which are typically involved in simulating data communications via a radio communications channel;

Figure 2 is a schematic block diagram of a multi-path correlation receiver otherwise known as a rake receiver;

Figure 3 is a schematic block diagram of the transmitter and receiver chain of Figure 1 adapted to include a simplification of parts representing the radio communications channel;

Figure 4 is a schematic block diagram of a signal processing apparatus which simulates the parts of the communications channel illustrated in Figure 3;

Figure 5 provides a graphical representation of simulation results for a "Pedestrian A" radio communications channel with a mobile motion speed of 3km/h, for the simplified equivalent channel and the conventional fully simulated channel;

Figure 6 provides a graphical representation of simulation results for a "Pedestrian A" radio communications channel with a mobile motion speed of 120km/h, for the simplified equivalent channel and the conventional fully simulated channel;

Figure 7 is a tabular representation of the components making up a 3GPP "Typical Urban" channel, before and after transformation; and

Figure 8 provides a graphical representation of multi-path channel components before and after transformation according to the simplification;

Figure 9 is a flow diagram illustrating the operations involved in simulating the communications channel illustrated in Figures 3 and 4.

### Description of Preferred Embodiments

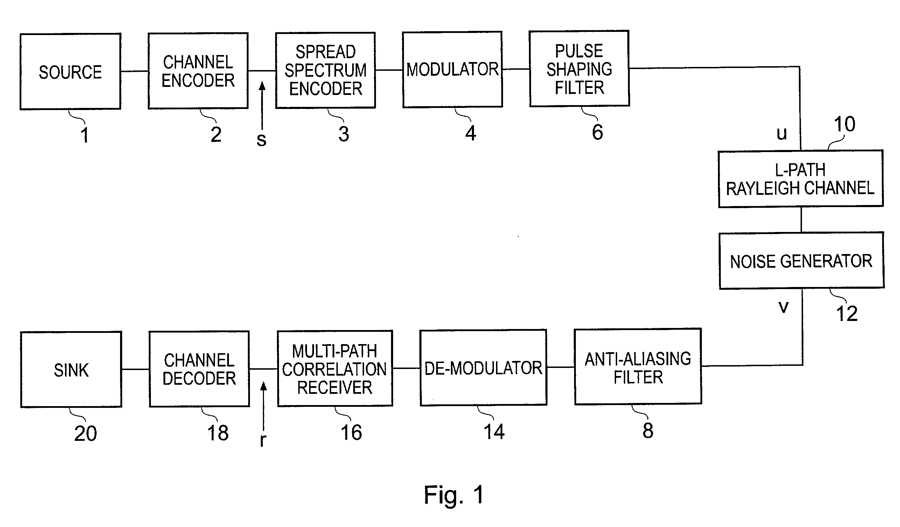

Schematic block diagrams in Figures 1, 2 and 3 provide an illustration of a transformation providing a simplification of a simulated radio communications channel according to an embodiment of the present invention. In Figure 1 a data source 1 generates data in digital form, which is fed to an encoder 2. The encoder 2 could apply any form of coding to the data generated from the source 1, such as error correction encoding. A spread spectrum encoder 3 then receives the encoded data, and generates a spread spectrum signal by modulating a spreading code with the encoded data. Typically, the spreading code is formed from a pseudo-random bit sequence having a non-repetitive period of one thousand or more bits, each bit of the modulated spreading code being known as a chip. The spread spectrum signal is then received by a modulator 4. The modulator modulates a base band carrier signal with the chips of the spread spectrum signal. Typically this might include some form of phase or amplitude modulation such a QPSK or QAM in which the phase and/or amplitude of the base band carrier signal is modulated with the encoded data.

The signal from the modulator 4 is fed to a pulse shaping filter 6 which provides a bandwidth limiting effect which would be applied to the radio signal to be communicated before transmission. As those acquainted with Nyquist bandwidth filtering will appreciate, the pulse-shaping filter is typically in the form of a root raised cosine response so that by employing a corresponding root raised cosine filter at the receiver, an overall raised cosine response is produced. Accordingly by sampling the received data at the symbol time (which for a spread spectrum signal is the chip period), the effects of adjacent chips will be substantially zero at the sampling instant, thereby minimising inter-symbol interference which otherwise might be introduced by the band limiting filters.

For an equivalent transmitter to that represented in Figure 1, the base band modulated signal would be up converted to a radio frequency signal, amplified and transmitted from an appropriate antenna. However, as those acquainted with the simulation of digital communications systems will appreciate, the effects of the radio communications channel can be modelled by applying equivalent effects to the base band signal produced by the modulator 4.

Many radio communications channels can be represented as a plurality of L discrete paths, each path providing an independently fading version of the radio signal being represented by a zero mean complex gaussian process also known as a Rayleigh fading process.. Therefore as shown in Figure 1, the simulated transmitted signal passes from the pulse-shaping transmitter filter 6 to an anti-aliasing receiver filter 8, via an L-path Rayleigh fading channel 10 and a noise generator 12. Whilst the L-path Rayleigh fading channel 10 models the effects of a multi-path radio channel, the effects of noise which is introduced during transmission and is present at the receiver antenna (due to thermal noise) is provided by the noise generator 12. If u is the signal before channel 10, then the signal after the noise generator 12 is

$$v(t) = \sum_{i=0}^{L-1} h_i u(t - \tau_i) + AWGN$$

with $h_i$ the complex channel coefficient and $\tau_i$ the delay for path i. AWGN stands for Additive White Gausssian Noise.

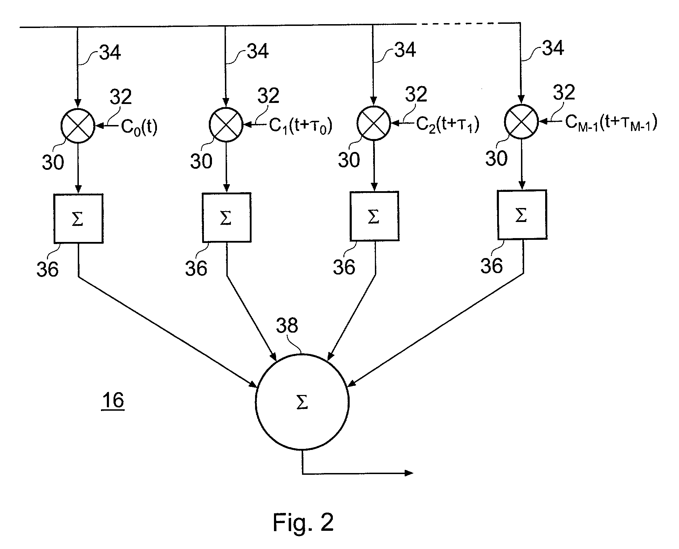

After passing through the receiver filter 8, the received signal is fed to a de-modulator 14, which produces an estimate of the spread spectrum encoded data produced by the spread spectrum encoder 3, by performing a reverse mapping of the data from the complex base band signal as was applied to the modulator 4. The received spread spectrum encoded data is then fed to a multi-path correlation receiver 16. As will be explained shortly with reference to Figure 2, the multi-path correlation receiver 16, recovers an estimate of the base band encoded data, by correlating the received demodulated data with a reproduced version of the spreading code which was used to form the transmitted signal by the spread spectrum encoder. The de-spread base band encoded data is then fed to a decoder 18, which forms a reverse of the encoding process to estimate the base band data. The estimation of the base band data may include correcting errors in the estimation of the received data, if the data has been encoded using an error correction code. The estimated base band data is then fed to a sink 20.

Figure 2 provides a more detailed representation of the multi-path correlation receiver, otherwise known as a rake receiver. The rake receiver 16 includes a plurality of *L* correlators 30, each of the correlators 30 receives on a first input 32 a version of the spreading code $C_n(t)$ which was used to spread the received data bearing spread spectrum signal in the spread spectrum encoder 3. To a second input 34 of the correlators 30, the received sampled signal is fed from the de-modulator. The samples of the received signal are multiplied by the corresponding samples of the spreading code at the chip rate. The result of being multiplied by the spreading code is summed by summers 36 to form, for each spread spectrum symbol, a de-spread sample, which is summed by a further summer 38. The further summer 38 forms a sample of the base band encoded data which is de-spread and has the effect of substantially reducing the inter symbol interference introduced by the multi-path fading channel.

The spreading code is reproduced within the rake receiver 16. Each version of the spreading code fed on the respective inputs 32 for each correlator 30 is delayed with respect to the first correlator, by an amount which represents a likely temporal position of one of the paths of the *L* path channel. Accordingly, the delays of each of the spreading codes which are represented as corresponding shifts of the spreading code sequence, aim to reflect the distribution of energy introduced by the multi-path channel.

From the representation of the spread spectrum communications channel according to the example of Figure 1, a base band data symbols communicated from the output of the encoder 2, to the output *r* of the multi-path correlation receiver 18, may be represented by the following equation:

$$r = s\sqrt{\sum_{i=0}^{L-1}\sum_{j=0}^{L-1} X_i X_j^* \rho_{ij}} + ISI + AWGN \qquad (1)$$

Each of the $L$ paths of the simulated multi-path channel have parameters $(\lambda_i, \tau_i)_{0 \leq i < L}$, where $\lambda_i$ is the average attenuation of path $i$ with a delay $\tau_i$. The received symbol $r$ is determined for a transmitted symbol $s$ from equation (1) in which $X_i$ is a complex zero-mean gaussian random variable of variance $\lambda_i$ and $\rho_{ij}$ is the correlation between the correlators $i$ and $j$ of the rake receiver, the number of correlators in the rake receiver being $L$. For the example of root raised cosine filters, the correlation coefficients can be derived from the delays through the auto-correlation function of the raised cosine filter, as expressed below:

$$\rho_{ij} = \frac{\sin(\pi\Delta_{ij})\cos(\pi\beta\Delta_{ij})}{\pi\Delta_{ij}(1-4\beta^2\Delta\,\Delta_{ij}^2)} \qquad (2)$$

where $\Delta_{ij} = \dfrac{\tau_i - \tau_j}{T_c}$ and for the example of UMTS, the parameters for these equations are:

$$\begin{cases} \beta = 0.22 \\ \dfrac{1}{T_c} = 3.84 MHz \end{cases}$$

As mentioned above, in order to simulate the effects of the multi-path fading channel, the $L$-path multi-path fading channel 10, requires the generation of a complex gaussian sample per chip of the spread spectrum signal. As will be appreciated, this represents a substantial computational load, in terms of the number of computations per second. Accordingly, a time taken to simulate the communication of a base band symbol including spreading and de-spreading, with multi-path fading channel at the chip rate may be large and for some simulations prohibitive.

### Transformation of L-path Multi-path Fading Channel

Embodiments of the present invention provide a facility for reducing the number of computations required per second required to simulate a multi-path fading channel. The reduction in complexity according to an embodiment of the invention comprises introducing a transformation of a matrix of values representing the double summation expressed as equation (1) above. The transformation thereby provides a simplification of the channel model.

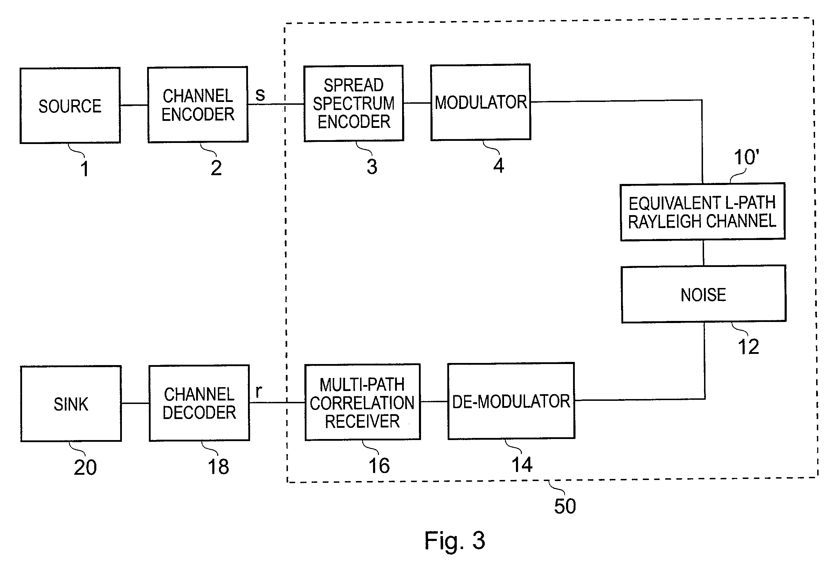

The transformation comprises computing the eigen values $(\mu_i)_{0 \leq i < L}$ of a matrix formed according to the double summation of equation (1), which is $_L(\rho_{ij})_{0 \leq i,j < L}\rfloor K$ where K is the correlation matrix of the channel (channel correlation matrix). In the usual case of independent paths, it becomes $_L(\rho_{ij})_{0 \leq i,j < L}\rfloor \cdot Diag_L(\lambda_i)_{0 \leq i,j < L}\rfloor$. According to the simplification provided by the transformation, the schematic block diagram of Figure 1, becomes that shown in Figure 3, where the output of the rake receiver 16' according to the simplified parts shown within a box 50, becomes that expressed by the equation below:

$$r = s\sqrt{\sum_{i=0}^{N-1} |Y_i|^2} + ISI + AWGN \qquad (3)$$

Where in equation (3), $Y_i$ is a complex zero-mean gaussian random variable of variance $\mu_i$ and there is no correlation component. The main embodiment of the present invention is therefore to replace the channel definition set $(\lambda_i, \tau_i)$ by $(\mu_i, iT_c)$. For any initial channel model, we find a equivalent one which is adapted to the rate of the transmission we consider. It can be CDMA, TDMA (replacing the chips by symbols) or MIMO. Furthermore, according to equation (3), and as explained below, the number of signal simulators $N$ may be less than or equal to the number of paths $L$.

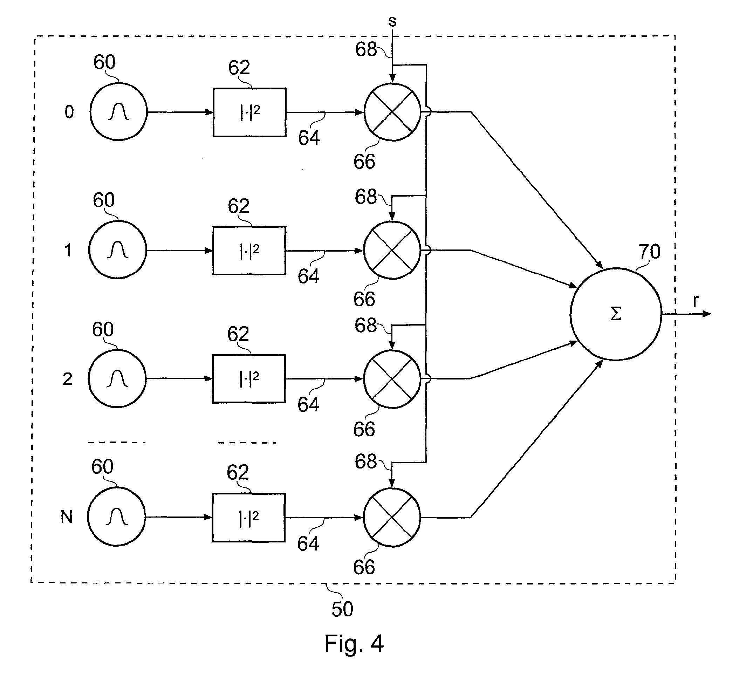

The radio communications channel represented by the schematic block diagram shown in Figure 3, corresponds to that shown in Figure 1 and so only the differences between Figures 1 and 3 will be explained. According to the transformation expressed by equation (3), the multi-path Rayleigh fading channel is transformed, to form an equaivalent channel 10'. As a result of the transformation all parts within the box 50 may be represented by equation (3). A diagram providing an implementation of a signal processing apparatus for representing the parts in box 50 is shown in Figure 4.

In Figure 4, a plurality of $N$ signal simulators 60 generate signal component values $Y_i$ in accordance with zero mean complex random gaussian processes having a variance $\mu_i$. The component values are fed to data processors 62 which form the squared magnitude $|Y|^2$ of the signal component values which are fed to a first input 64 of multipliers 66. To a second input 68 the input data signal $s$ is fed. The data signal is scaled by each of the signal component values by the multipliers 66 and fed to a summer 70, which forms the representation of the received signal $r$. Effectively, the signal component values generated from each of the complex gaussian process form weighting factors for weighting the input data signal.

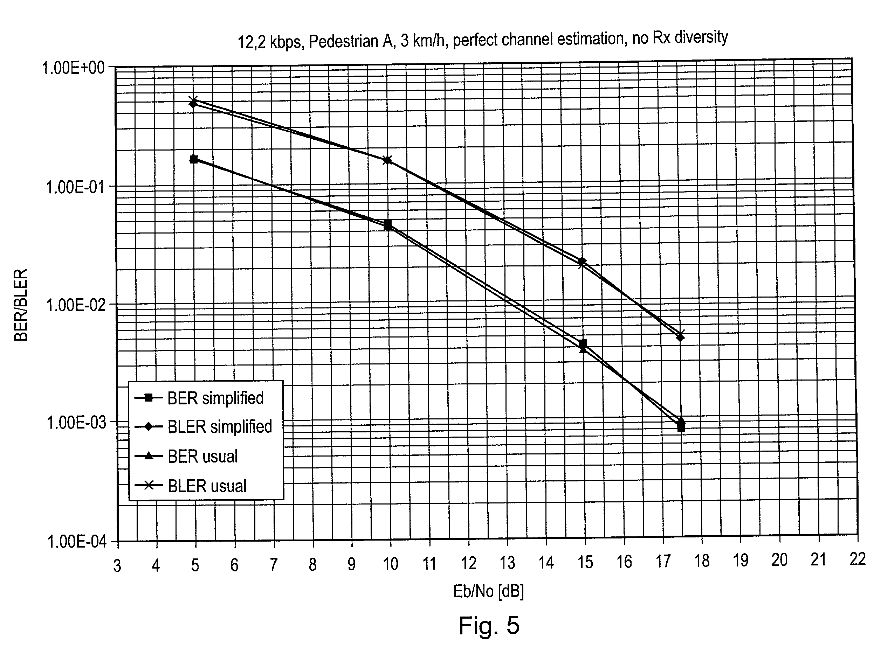

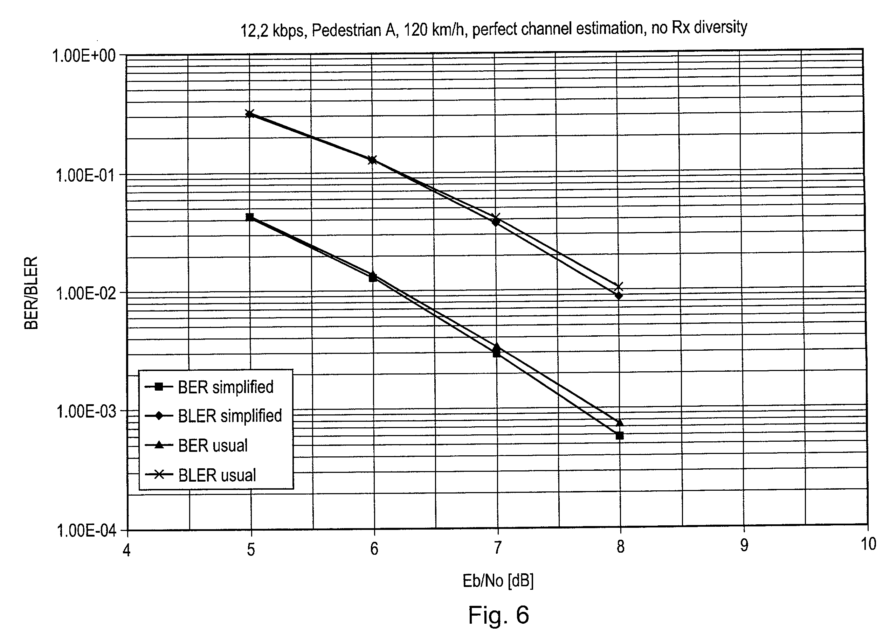

Figure 5 and 6 provide a comparison of results produced by a conventional full simulation of the multi-path fading channel with respect to results produced using the simplified equivalent channel. The results are for a "Pedestrian A" channel simulated with a data rate of 12.2 kbps and a motion speed of 3 km/h for Figure 5 and a motion speed of 120 km/h for Figure 6. Bit Error Rate (BER usual) and Block Error Rate (BLER usual) results for the usual simulation channel are illustrated with respect to Bit Error Rate (BER simplified) and Block Error Rate results (BER simplified) for the simplified equivalent channel. As can be observed there is a close correspondence between the results.

## Truncation of the Number of Simulated Paths

Equation (3) formed using the transformation according to an embodiment of the invention is less complex to compute than equation (1), amongst other reasons because there is no double summation. Furthermore, typically as a result of the transformation, a further simplification can be introduced. This is because the later values for $\mu_i$ (those closer to $L$) are typically low and have a small influence on the resulting calculation of the effects of the channel on the received symbol $r$, than the earlier components closer to zero delay. Therefore, even if it is not an exact result, a good approximation results when considering only the $\mu_i$ values over a certain pre-determined threshold. As a result, a further simplification of the simulation of the multi-path channel may be produced, by not including signal simulators generating complex zero mean gaussian having eigen values which are below a pre-determined threshold. Therefore in such embodiments, the number of signal simulators $N$ is determined from the number of eigen values above the pre-determined threshold, each eigen value above the threshold forming the pre-determined variance for a corresponding signal simulator.

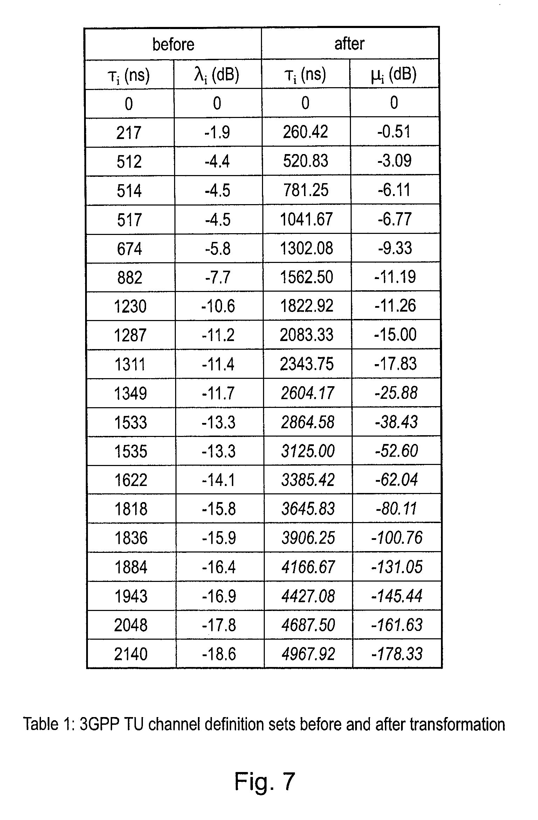

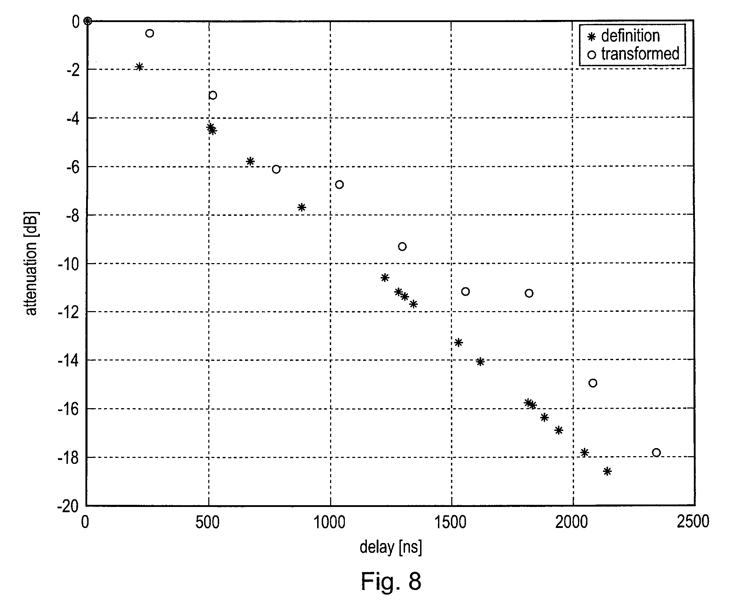

An example of this further simplification is provided in table 1 shown in Figure 7. In the first column labelled "before", the average attenuation with respect to delay for a "Typical Urban" channel adopted by the 3GPP is shown. In the second column labelled "after", the variance of the signal simulators used in the simplified equivalent channel is shown after transformation at the corresponding delays. Figure 8 provides a graphical representation of the values shown in the table of Figure 7. As can be seen from Figures 7 and 8, the number of signal components simulated can be halved using the simplified equivalent channel model, by ignoring the signal components which have a variance $\mu_i$ which is less than 20dB and therefore do not contribute significantly to the simulation results.

## Simple Worked Example

For a multi-path channel characterised by three paths, with the following parameters:

$$\text{At}\tau_0 = 0, \lambda_0 = 0.943;$$

$$\text{At}\tau_1 = 110ns, \ \lambda_1 = 0.309;$$

$$\text{At}\tau_2 = 190ns, \ \lambda_2 = 0.103;$$

For correlation coefficients describing the reception of a radio signal via the multi-path channel, as follows:

$$[(\rho_{ij})_{0\leq i,j\leq2}] = \begin{bmatrix} 1 & 0.725 & 0.318 \\ 0.725 & 1 & 0.848 \\ 0.318 & 0.848 & 1 \end{bmatrix}$$

Then

$$[(\rho_{ij})_{0\leq i,j\leq2}].Diag[(\lambda_i)_{0\leq i\leq2}] = \begin{bmatrix} 0.943 & 0.224 & 0.0327 \\ 0.684 & 0.309 & 0.0873 \\ 0.3 & 0.262 & 0.103 \end{bmatrix}$$

$$\text{for which } \mu_i = \begin{bmatrix} 1.153 \\ 0.197 \\ 0.006 \end{bmatrix}$$

### Proof of Equivalents of the Simplified Simulated Channel

Perfect channel estimation is assumed and inter-symbol interference is neglected. Some notations are specific to this proof. X represents the first path and Y the second one instead of $X_0$ and $X_1$ in the rest of the document. The subscripts are used for the time scale (symbol k is written $s_k$). After the transformation, X' and Y' are used instead of $Y_0$ and $Y_1$ in the rest of the document. In the case of two paths, the usual channel definition gives $(\lambda_1, 0)$ for the first path and $(\lambda_2, \tau)$ for the second one. The correlation coefficient $\rho_{12}$ between the two paths is derived from $\tau$ and the characteristics of the pulse shaping filter.

The symbol k at the output of the Rake receiver can be written

$$r_k = s_k\sqrt{\varepsilon_k} + AWGN$$

The energy of this symbol is

$$\varepsilon_k = |X_k|^2 + |Y_k|^2 + 2\rho_{12}X_kY_k$$

where $X_k$ and $Y_k$ are two independent zero-mean Gaussian processes with variance $\lambda_1$ and $\lambda_2$. Diagonalizing the product of the quadratic form and the two paths covariance matrix, leads to the eigenvalues $\mu_1$ and $\mu_2$. We consider the energy

$$\varepsilon'_k = |X'_k|^2 + |Y'_k|^2$$

where $X'_k$ and $Y'_k$ are two independent zero-mean Gaussian processes with variance $\mu_1$ and $\mu_2$. The associated symbol is

$$r'_k = S_k\sqrt{\varepsilon'_k} + AWGN$$

We want to prove that the two processes $\varepsilon$ and $\varepsilon'$ are identical which implies in particular $r_k = r'_k$ and the equality of the error probabilities after decoding. In order to achieve this, it is enough to prove that the joint densities $p(\varepsilon)$ and $p(\varepsilon')$ with $\varepsilon = (\varepsilon_1 \dots \varepsilon_n)$ and $\varepsilon' = (\varepsilon'_1 \dots s'_n)$ are equal for all n. The following demonstration assumes n = 2 without loss of generality.

The characteristic function of the symbol energy can be written

$$\psi_\varepsilon(v) = E[\exp(jv_1\varepsilon_1 + jv_2\varepsilon_2)]$$

$$\psi_\varepsilon(v) = \int \frac{\exp[jv^*\varepsilon - \frac{1}{2}(X * K_X^{-1} X + Y * K_Y^{-1} Y)]}{4\pi^2 \sqrt{\det K_X \det K_Y}} dXdY$$

$$\psi_\varepsilon(v) = \int \exp[u^*(G_v - K_{XY}^{-1})u]du$$

$$\psi_\varepsilon(v) = \frac{1}{\det|I - G_v K_{XY}|}$$

with

$$X = (X_1, X_2), \gamma_X = E[X_1^2] = E[X_2^2], Y = (Y_1, Y_2), \gamma_Y = E[Y_1^2] = E[Y_2^2],$$

$$K_X = \begin{pmatrix} \gamma_X & E[X_1X_2] \\ E[X_1X_2] & \gamma_X \end{pmatrix}, K_Y = \begin{pmatrix} \gamma_Y & E[Y_1Y_2] \\ E[Y_1Y_2] & \gamma_Y \end{pmatrix},$$

$$u = (X_1, Y_1, X_2, Y_2),$$

$$G = \begin{pmatrix} 1 & \rho_{12} \\ \rho_{12} & 1 \end{pmatrix}, K = \begin{pmatrix} \gamma_X & 0 \\ 0 & \gamma_Y \end{pmatrix},$$

$$J_1 = \frac{E[X_1X_2]}{\gamma_X} = \frac{E[Y_1Y_2]}{\gamma_Y},$$

$$G_v = \begin{pmatrix} jv_1 G & 0 \\ 0 & jv_2 G \end{pmatrix}, K_{XY} = \begin{pmatrix} K & J_1 K \\ J_1 K & K \end{pmatrix}$$

The same method leads to

$$\psi_{\varepsilon'}(v) = \frac{1}{\det|I - \Delta_{xXY}|}$$

with

$$\Delta_{vXY} = \begin{pmatrix} jv_1 D & jv_1 J_1 D \\ jv_2 J_1 D & jv_2 D \end{pmatrix}$$

where D is the diagonalization of GK so that GK = P*DP.

Furthermore, a simple calculation shows that

$$G_v K_{XY} = \begin{pmatrix} P* & 0 \\ 0 & P* \end{pmatrix} \Delta_{vXY} \begin{pmatrix} P & 0 \\ 0 & P \end{pmatrix}$$

therefore

$$\det(I - G_v K_{XY}) = \det(I - \Delta_{vXY})$$

which implies

$$\psi_\varepsilon(v) = \psi_{\varepsilon'}(v) \text{ and } p(\varepsilon) = p(\varepsilon')$$

Finally the two processes are the same. The simplified one obtained with the invention is equivalent to the usual one. So the error probabilities after decoding are the same. It is easy to generalize this proof to the case of more paths. In the case of imperfect channel estimation, a variant of this proof leads to the same result.

## Other Applications

One advantage provided by embodiments of the present invention is that the simplified equivalent channel model can be used to provide a symbol level Markov chain modelling the parts within the box 50 of Figure 3, including spreading, transmission via the communications channel and de-spreading. A Markov channel model can represent a radio communications channel using a plurality of channel states representing the states of the radio communications channel. A transition between states is determined according to transition probabilities. It is the transition probabilities, which are determined from the effects of the radio communications channel represented, for example, by the signal processing apparatus illustrated in Figure 4. An explanation of a process for generating the transition probabilities from the results of a simulated channel is provided in more detail in a technical article by A. Saadani, and P. Tortelier, entitled "A First Order Markov Chain Based Model for Flat Fading Channel," published at the International Symposium on Personal, Indoor and Mobile Radio Communications, PIMRC'2002.

## Summary of Operation

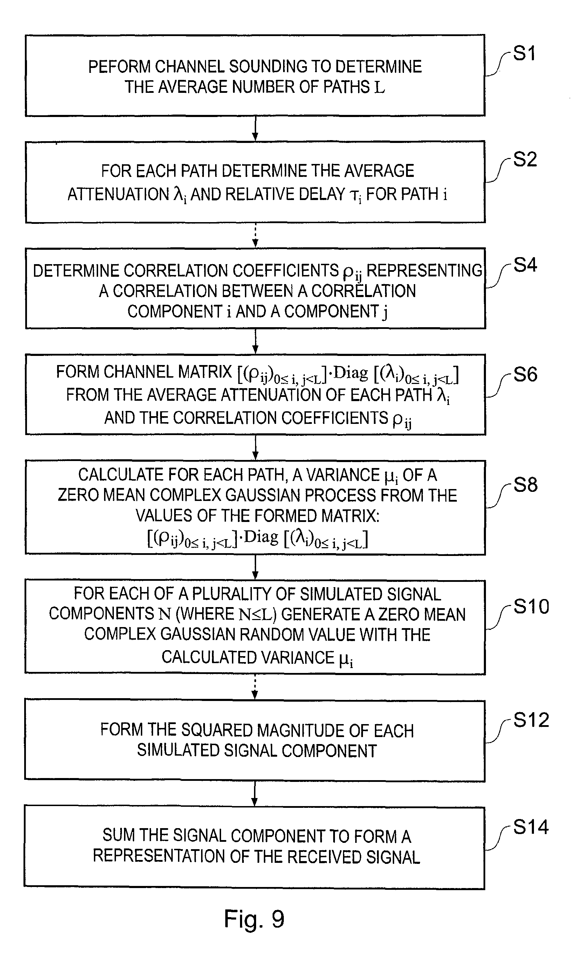

In summary a flow diagram presenting in Figure 9 summarises a process of modelling the effects of a radio communications channel. Starting with step S1, channel sounding is performed to identify a number of paths $L$ via which a signal may be received from the radio communications channel. The channel sounding process also determines at step S2 an average attenuation and a pre-determined delay with respect to a first of the paths of a communicated radio signal for each of the paths. Generally, the steps S1 and S2, which characterise the radio communications channel, are performed separately to the channel modelling and simplification of the channel model according to embodiments of the present invention. Accordingly, in some embodiments these steps are omitted or have already been performed for channels for which the characterising parameters of the number of paths $L$, the delay and the average attenuation have already been established, and so may be omitted. This is represented in Figure 9 by a dashed line between steps S2 and S4.

The steps involved in representing the effects of the radio communications channel are therefore represented in Figure 8 as follows:

S4: A plurality of correlation coefficients representing a correlation between each of a plurality of components of the received signal are determined in accordance with a communications technique which is used to communicate the received signal. For example, the communications technique may be CDMA, in which the coefficients represent the correlated output of each finger of a rake receiver.

S6: A matrix is formed from the correlation coefficients and the average attenuation of each of the paths ($(\rho_{ij})_{0 \leq i,j<L} \cdot \text{Diag}_L (\lambda_i)_{0 \leq i,j<L}$).

S8: For each of the paths of the radio channel, a variance of a complex zero mean gaussian random process is calculated from the eigen values of the formed matrix.

S10: For each simulated signal component $N$ (where $N$ is less than or equal to the number of paths $L$), a value from a complex zero mean gaussian random variable having the variance calculated in S8.

S12: Form the squared magnitude of each of the signal component values calculated in S10.

S14: The signal component values are summed to produce, for each path, a representation of a signal received via the radio communications channel.

As will be appreciated, once the variances of the zero mean complex gaussian random process have been determined in S8 from the eigen values of the matrix formed in S6, then these steps are no longer necessary when the channel is being simulated. Hence in Figure 9 steps S8 and S10 are connected by a dashed line. Accordingly, in some embodiments only steps S10, S12 and S14 are performed in order to represent the effects of the radio communications channel being modelled.

Various modifications may be made to the embodiments described above without departing from the scope of the present invention. For example, the present invention finds application in the simulation of receiver diversity and equalisation techniques and can be applied to various communications techniques such as TDMA and MIMO. Various further aspects and features of the present invention are defined in the appended claims.

## Claims

1. A signal processing apparatus operable to represent the effects on a received signal of a radio communications channel having $L$ paths, each path having an average attenuation and a pre-determined respective delay, wherein the received signal includes a combination of correlated components determined from an effect of pulse shaping filters on the received signal, each correlated component having a correlation coefficient representing a correlation of the received signal component with respect to each of the other components, the signal processing apparatus comprising

   a plurality of signal simulators, each simulator generating a signal component value proportional to a complex zero mean gaussian random variable having a pre-determined variance, and

   a summer operable to sum the signal component values produced from each signal simulator, to form a representation of the signal received via the radio communications channel, wherein the variance of each of the signal simulators is pre-determined by calculating the eigen values of a matrix formed from the correlation coefficients and from a channel correlation matrix which includes the average attenuation of each of the L paths.

2. A signal processing apparatus as claimed in Claim 1, wherein the number of signal simulators is less than the number of paths $L$ of the radio communications channel, the number of signal simulators being determined from the number of eigen values above a pre-determined threshold, each eigen value above the threshold forming the pre-determined variance for a corresponding signal simulator.

3. A signal processing apparatus as claimed in Claim 1 or 2, wherein the correlated components from which the received signal is formed are representative of components formed from respective correlators of a rake receiver, the received signal being a spread spectrum signal, the correlation coefficients representing a correlation of the output signal of each correlator with respect to the output of the other correlators.

4. A signal processing apparatus as claimed in Claim 1, 2 or 3, wherein the signal component value produced by each signal simulator is formed from a squared magnitude of the zero mean complex gaussian random variable.

5. A signal processing apparatus as claimed in Claim 4, wherein each of the paths $L$ of the multi-path channel $i$ have parameters $(\lambda_i, \tau_i)_{0 \leq i < L}$, where $\lambda_i$ is the average attenuation of path $i$ having the delay $\tau_i$ with respect to a first of the paths, and the summer provides a representation of the received signal $r$ for an input signal $s$ represented by the equation:

$$r = s \sum_{i=0}^{L-1} \left| Y_i \right|^2$$

   where $|Y_i|^2$ is the squared magnitude of the complex zero mean gaussian random variable produced by the $i$-th signal simulator, the gaussian random variable having the pre-determined variance $\mu_i$ calculated from the eigen values $(\mu_i)_{0 \leq i < L}$ of the matrix formed matrix $\lfloor (\rho_{ij})_{0 \leq i,j < L} \rfloor \cdot Diag_{\lfloor} (\lambda_i)_{0 \leq i,j < L} \rfloor$, where $\rho_{ij}$ are the $L$ correlation coefficients, and $Diag_{\lfloor} (\lambda_i)_{0 \leq i,j < L} \rfloor$ is the channel correlation matrix for independent paths.

6. A signal processing apparatus as claimed in Claim 5, wherein the correlation coefficients are calculated according to the equation:

$$\rho_{ij} = \frac{\sin(\pi \Delta_{ij}) \cos(\pi \beta \Delta_{ij})}{\pi \Delta_{ij}(1 - 4\beta^2 \Delta_{ij}^2)}$$

where

$$\Delta_{ij} = \frac{\tau_i - \tau_j}{T_c} \, ,$$

$T_c$ being the duration of each chip of the received spread spectrum signal and $\beta$ the roll-off factor.

**7.** A channel simulator including a signal processing apparatus as claimed in any preceding Claim, and a noise generator operable to simulate the effects of noise on the received signal.

**8.** A channel simulator including a signal processing apparatus as claimed in Claim 7, wherein the noise generator is operable to include the effects of inter symbol interference on the received signal.

**9.** A channel simulator for representing a radio communications channel in accordance with a markov model, the channel simulator comprising a plurality of channel states representing the states of the radio communications channel, a transition between states being determined according to transition probabilities, wherein the transition probabilities are determined from the effects of the radio communications channel represented by the signal processing apparatus according to any of Claims 1 to 6.

**10.** A method of representing the effects of a radio communications channel having L paths on a received signal, each path having an average attenuation and a pre-determined respective delay, wherein the received signal includes a combination of correlated components determined from an effect of pulse shaping filters on the received signal, each correlated component having a correlation coefficient representing a correlation of the received signal component with respect to each of the other components, the method comprising
generating a plurality of complex zero mean gaussian random variables each having a pre-determined variance, and
summing the variables, to form a representation of the signal received via the radio communications channel, wherein the pre-determined variance of each variable is calculated from the eigen values of a matrix formed from the correlation coefficients and from a channel correlation matrix which includes the average attenuation of each of the L paths.

**11.** A method of representing as claimed in Claim 10, wherein the number of complex zero mean gaussian random variables is less than the number of paths L of the radio communications channel, the number of variables being determined from the number of eigen values which are above a pre-determined threshold, each eigen value above the threshold forming the variance for a corresponding one of the gaussian random variables.

**12.** A method as claimed in Claim 10 or 11, comprising
forming a squared magnitude of the zero mean complex gaussian variable, before summing to form the representation of the received signal.

**13.** A method as claimed in Claim 12, wherein each of the paths $L$ of the multi-path channel $i$ have parameters $(\lambda_i, \tau_i)_{0 \le i < L}$, where $\lambda_i$ is the average attenuation of path $i$ having a delay $\tau_i$ with respect to a first of the paths, the summing producing the representation of the received signal $r$ for an input signal $s$ according to the equation:

$$r = s \sum_{i=0}^{L-1} |Y_i|^2$$

where $|Y_i|^2$ is the squared magnitude of the $i$-th complex zero mean gaussian random variable, the gaussian random variable having the pre-determined variance $\mu_i$ calculated from the eigen values $(\mu_i)_{0 \le i < L}$ of the formed matrix $\lfloor (\rho_{ij})_{0 \le i,j < M} \rfloor \cdot Diag_L (\lambda_i)_{0 \le i,j < L} \rfloor$, where $\rho_{ij}$ are the $M$ correlation coefficients, and $DiagL_L (\lambda_i)_{0 \le i,j < L} \rfloor$ is the channel correlation matrix for independent paths.

**14.** A method of representing as claimed in Claim 13, wherein the correlation coefficients are calculated according to the equation:

$$\rho_{ij} = \frac{\sin(\pi\Delta_{ij})\cos(\pi\beta\Delta_{ij})}{\pi\Delta_{ij}(1 - 4\beta^2 \Delta_{ij}^2)}$$

where

$$\Delta_{ij} = \frac{\tau_i - \tau_j}{T_c},$$

$T_c$ being the duration of each chip of the received spread spectrum signal.

**15.** A method of simulating a radio communications channel, comprising
identifying a number of paths $L$ via which a signal may be received from the radio communications channel,
determining an average attenuation and a pre-determined delay with respect to a first of the paths of a communicated radio signal for each of the paths,
determining a plurality of correlation coefficients from an effect of pulse shaping filters on the received signal,
forming a matrix from the correlation coefficients introduced by the pulse shaping filters and from a channel correlation matrix which includes the average attenuation of each of the $L$ paths,
for each of the paths of the radio channel, calculating a variance of a complex zero mean complex gaussian process from the eigen values of the formed matrix,
generating, for each path, a signal component value proportional to the complex zero mean gaussian random variable having the calculated variance, and
summing the signal component values produced for each path, to form a representation of a signal received via the radio communications channel.

**16.** A computer program providing computer executable instructions, which when loaded on to a data processor configures the data processor to operate as a signal processing apparatus as claimed in any of Claims 1 to 6 or a channel simulator as claimed in any of Claims 7 to 9.

**17.** A computer program having computer executable instructions, which when loaded on to a data processor causes the data processor to perform the method according to any of Claims 10 to 15.

**18.** A data carrier having a recording medium on which is recorded instructions representing the computer program claimed in Claim 16 or 17.

**Amended claims under Art. 19.1 PCT**

**1.** A signal processing apparatus operable to represent the effects on a received signal of a radio communications channel having $L$ paths, each path having an average attenuation and a pre-determined respective delay, wherein the received signal includes a combination of correlated components determined from an effect of pulse shaping filters on the received signal, each correlated component having a correlation coefficient representing a correlation of the received signal component with respect to each of the other components, the signal processing apparatus comprising
a plurality of signal simulators (60), each simulator (60) generating a signal component value proportional to a complex zero mean gaussian random variable having a pre-determined variance, and
a summer (70) operable to sum the signal component values produced from each signal simulator (60), to form a representation of the signal received via the radio communications channel, wherein the variance of each of the component values produced by the signal simulators (60) is pre-determined by calculating the eigen values of a matrix formed from the correlation coefficients and from a channel correlation matrix which includes the average attenuation of each of the $L$ paths.

**2.** A signal processing apparatus as claimed in Claim 1, wherein the number of signal simulators (60) is less than the number of paths $L$ of the radio communications channel, the number of signal simulators (60) being determined from the number of eigen values above a pre-determined threshold, each eigen value above the threshold forming the pre-determined variance for a corresponding signal simulator.

**3.** A signal processing apparatus as claimed in Claim 1 or 2, wherein the correlated components from which the received signal is formed are representative of components formed from respective correlators of a rake receiver, the received signal being a spread spectrum signal, the correlation coefficients representing a correlation of the output signal of each correlator with respect to the output of the other correlators.

**4.** A signal processing apparatus as claimed in Claim 1, 2 or 3, wherein the signal component value produced by each signal simulator (60) is formed from a squared magnitude of the zero mean complex gaussian random variable.

**5.** A signal processing apparatus as claimed in Claim 4, wherein each of the paths $L$ of the multi-path channel $i$ have parameters $(\lambda_i, \tau_i)_{0 \leq i < L}$, where $\lambda_i$ is the average attenuation of path $i$ having the delay $\tau_i$ with respect to a first of the paths, and the summer (70) provides a representation of the received signal $r$ for an input signal $s$ represented by the equation:

$$r = s \sum_{i=0}^{L-1} |Y_i|^2$$

where $|Y_i|^2$ is the squared magnitude of the complex zero mean gaussian random variable produced by the $i$-th signal simulator (60), the gaussian random variable having the pre-determined variance $\mu_i$ calculated from the eigen values $(\mu_i)_{0 \leq i < L}$ of the matrix formed matrix $_L (\rho_{ij})_{0 \leq i,j < L} \rfloor \cdot Diag_L (\lambda_i)_{0 \leq i,j < L} \rfloor$, where $\rho_{ij}$ are the $L$ correlation coefficients, and $Diag[(\lambda_i)_{0 \leq i,j < L}]$ is the channel correlation matrix for independent paths.

**6.** A signal processing apparatus as claimed in Claim 5, wherein the correlation coefficients are calculated according to the equation:

$$\rho_{ij} = \frac{\sin(\pi \Delta_{ij}) \cos(\pi \beta \Delta_{ij})}{\pi \Delta_{ij}(1 - 4\beta^2 \Delta_{ij}^2)}$$

where

$$\Delta_{ij} = \frac{\tau_i - \tau_j}{T_c} ,$$

$T_c$ being the duration of each chip of the received spread spectrum signal and $\beta$ the roll-off factor.

**7.** A channel simulator including a signal processing apparatus as claimed in any preceding Claim, and a noise generator (12) operable to simulate the effects of noise on the received signal.

**8.** A channel simulator including a signal processing apparatus as claimed in Claim 7, wherein the noise generator (70) is operable to include the effects of inter symbol interference on the received signal.

**9.** A channel simulator for representing a radio communications channel in accordance with a markov model, the channel simulator comprising a plurality of channel states representing the states of the radio communications channel, a transition between states being determined according to transition probabilities, wherein the transition probabilities are determined from the effects of the radio communications channel represented by the signal processing apparatus according to any of Claims 1 to 6.

**10.** A method of representing the effects of a radio communications channel having $L$ paths on a received signal, each path having an average attenuation and a pre-determined respective delay, wherein the received signal includes a combination of correlated components determined from an effect of pulse shaping filters on the received signal, each correlated component having a correlation coefficient representing a correlation of the received signal component with respect to each of the other components, the method comprising generating a plurality of complex zero mean gaussian random variables each having a pre-determined variance, and

summing the variables, to form a representation of the signal received via the radio communications channel, wherein the pre-determined variance of each variable is calculated from the eigen values of a matrix formed from the correlation coefficients and from a channel correlation matrix which includes the average attenuation of each of the $L$ paths.

**11.** A method of representing as claimed in Claim 10, wherein the number of complex zero mean gaussian random variables is less than the number of paths $L$ of the radio communications channel, the number of variables being determined from the number of eigen values which are above a pre-determined threshold, each eigen value above the threshold forming the variance for a corresponding one of the gaussian random variables.

**12.** A method as claimed in Claim 10 or 11, comprising

forming a squared magnitude of the zero mean complex gaussian variable, before summing to form the representation of the received signal.

**13.** A method as claimed in Claim 12, wherein each of the paths $L$ of the multi-path channel $i$ have parameters $(\lambda_i, \tau_i)_{0 \leq i < L}$, where $\lambda_i$ is the average attenuation of path $i$ having a delay $\tau_i$ with respect to a first of the paths, the summing producing the representation of the received signal $r$ for an input signal $s$ according to the equation:

$$r = s \sum_{i=0}^{L-1} \left| Y_i \right|^2$$

where $|Y_i|^2$ is the squared magnitude of the i-th complex zero mean gaussian random variable, the gaussian random variable having the pre-determined variance $\mu_i$ calculated from the eigen values $(\mu_i)_{0 \leq i < L}$ of the formed matrix $_L (\rho_{ij})_{0 \leq i,j < M} \rfloor \cdot Diag_L (\lambda_i)_{0 \leq i,j < L} \rfloor$, where $\rho_{ij}$ are the $M$ correlation coefficients, and $Diag_L (\lambda_i)_{0 \leq i,j < L} \rfloor$ is the channel correlation matrix for independent paths.

**14.** A method of representing as claimed in Claim 13, wherein the correlation coefficients are calculated according to the equation:

$$\rho_{ij} = \frac{\sin(\pi \Delta_{ij}) \cos(\pi \beta \Delta_{ij})}{\pi \Delta_{ij}(1 - 4\beta^2 \Delta_{ij}^2)}$$

where

$$\Delta_{ij} = \frac{\tau_i - \tau_j}{T_c},$$

$T_c$ being the duration of each chip of the received spread spectrum signal.

**15.** A method of simulating a radio communications channel, comprising

identifying a number of paths $L$ via which a signal may be received from the radio communications channel,

determining an average attenuation and a pre-determined delay with respect to a first of the paths of a communicated radio signal for each of the paths,

determining a plurality of correlation coefficients from an effect of pulse shaping filters on the received signal,

forming a matrix from the correlation coefficients introduced by the pulse shaping filters and from a channel correlation matrix which includes the average attenuation of each of the $L$ paths,

for each of the paths of the radio channel, calculating a variance of a complex zero mean complex gaussian process from the eigen values of the formed matrix,

generating, for each path, a signal component value proportional to the complex zero mean gaussian random variable having the calculated variance, and

summing the signal component values produced for each path, to form a representation of a signal received via the radio communications channel.

**16.** A computer program providing computer executable instructions, which when loaded on to a data processor configures the data processor to operate as a signal processing apparatus as claimed in any of Claims 1 to 6 or a channel simulator as claimed in any of Claims 7 to 9.

**17.** A computer program having computer executable instructions, which when loaded on to a data processor causes the data processor to perform the method according to any of Claims 10 to 15.

**18.** A data carrier having a recording medium on which is recorded instructions representing the computer program claimed in Claim 16 or 17.

Fig. 1

EP 1 447 927 A1

Fig. 2

Fig. 3

Fig. 4

12,2 kbps, Pedestrian A, 3 km/h, perfect channel estimation, no Rx diversity

Legend:
- BER simplified
- BLER simplified
- BER usual
- BLER usual

Y-axis: BER/BLER
X-axis: Eb/No [dB]

Fig. 5

EP 1 447 927 A1

12,2 kbps, Pedestrian A, 120 km/h, perfect channel estimation, no Rx diversity

Fig. 6

EP 1 447 927 A1

| before | | after | |
|---|---|---|---|
| $\tau_i$ (ns) | $\lambda_i$ (dB) | $\tau_i$ (ns) | $\mu_i$ (dB) |
| 0 | 0 | 0 | 0 |
| 217 | -1.9 | 260.42 | -0.51 |
| 512 | -4.4 | 520.83 | -3.09 |
| 514 | -4.5 | 781.25 | -6.11 |
| 517 | -4.5 | 1041.67 | -6.77 |
| 674 | -5.8 | 1302.08 | -9.33 |
| 882 | -7.7 | 1562.50 | -11.19 |
| 1230 | -10.6 | 1822.92 | -11.26 |
| 1287 | -11.2 | 2083.33 | -15.00 |
| 1311 | -11.4 | 2343.75 | -17.83 |
| 1349 | -11.7 | 2604.17 | -25.88 |
| 1533 | -13.3 | 2864.58 | -38.43 |
| 1535 | -13.3 | 3125.00 | -52.60 |
| 1622 | -14.1 | 3385.42 | -62.04 |
| 1818 | -15.8 | 3645.83 | -80.11 |
| 1836 | -15.9 | 3906.25 | -100.76 |
| 1884 | -16.4 | 4166.67 | -131.05 |
| 1943 | -16.9 | 4427.08 | -145.44 |
| 2048 | -17.8 | 4687.50 | -161.63 |
| 2140 | -18.6 | 4967.92 | -178.33 |

Table 1: 3GPP TU channel definition sets before and after transformation

## Fig. 7

Fig. 8

EP 1 447 927 A1

| PEFORM CHANNEL SOUNDING TO DETERMINE THE AVERAGE NUMBER OF PATHS L | S1 |

| FOR EACH PATH DETERMINE THE AVERAGE ATTENUATION $\lambda_i$ AND RELATIVE DELAY $\tau_i$ FOR PATH i | S2 |

| DETERMINE CORRELATION COEFFICIENTS $\rho_{ij}$ REPRESENTING A CORRELATION BETWEEN A CORRELATION COMPONENT i AND A COMPONENT j | S4 |

| FORM CHANNEL MATRIX $[(\rho_{ij})_{0 \le i, j < L}] \cdot \mathrm{Diag} [(\lambda_i)_{0 \le i, j < L}]$ FROM THE AVERAGE ATTENUATION OF EACH PATH $\lambda_i$ AND THE CORRELATION COEFFICIENTS $\rho_{ij}$ | S6 |

| CALCULATE FOR EACH PATH, A VARIANCE $\mu_i$ OF A ZERO MEAN COMPLEX GAUSSIAN PROCESS FROM THE VALUES OF THE FORMED MATRIX: $[(\rho_{ij})_{0 \le i, j < L}] \cdot \mathrm{Diag} [(\lambda_i)_{0 \le i, j < L}]$ | S8 |

| FOR EACH OF A PLURALITY OF SIMULATED SIGNAL COMPONENTS N (WHERE $N \le L$) GENERATE A ZERO MEAN COMPLEX GAUSSIAN RANDOM VALUE WITH THE CALCULATED VARIANCE $\mu_i$ | S10 |

| FORM THE SQUARED MAGNITUDE OF EACH SIMULATED SIGNAL COMPONENT | S12 |

| SUM THE SIGNAL COMPONENT TO FORM A REPRESENTATION OF THE RECEIVED SIGNAL | S14 |

Fig. 9

EP 1 447 927 A1

| | European Patent Office | EUROPEAN SEARCH REPORT | Application Number EP 03 29 0388 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | FECHTEL S A: "A NOVEL APPROACH TO MODELING AND EFFICIENT SIMULATION OF FREQUENCY-SELECTIVE FADING RADIO CHANNELS" IEEE JOURNAL ON SELECTED AREAS IN COMMUNICATIONS, IEEE INC. NEW YORK, US, vol. 11, no. 3, 1 April 1993 (1993-04-01), pages 422-431, XP000377964 ISSN: 0733-8716 * the whole document * | 1,7,9, 10,15-18 | H04B17/00 |
| D,A | SAADANI A ET AL: "A first order Markov chain based model for flat fading channel" FRANCE TELECOM R&D, vol. 4, 15 September 2002 (2002-09-15), pages 1636-1639, XP010611543 * the whole document * | 9 | |
| A | KIM H ET AL: "ENHANCED CORRELATED SHADOWING GENERATION IN CHANNEL SIMULATION" IEEE COMMUNICATIONS LETTERS, IEEE SERVICE CENTER, PISCATAWAY,US, US, vol. 6, no. 7, July 2002 (2002-07), pages 279-281, XP001123680 ISSN: 1089-7798 * the whole document * | | TECHNICAL FIELDS SEARCHED (Int.Cl.7) H04B |

The present search report has been drawn up for all claims

| Place of search | Date of completion of the search | Examiner |
|---|---|---|
| THE HAGUE | 22 July 2003 | Yang, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

25